# EUROPEAN PATENT SPECIFICATION

(11) **EP 3 599 312 B1**
(45) Date of publication and mention of the grant of the patent: **06.04.2022**
(21) Application number: 19186486.7
(22) Date of filing: 16.07.2019
(51) Int. Cl.: E02F 3/34, E02F 9/08, E02F 9/26, B66C 13/46, E02F 3/32, E02F 3/96

(54) **WORK VEHICLE WITH A VARIABLY POSITIONABLE CAMERA AND RELATED SYSTEMS**
ARBEITSFAHRZEUG MIT EINER VARIABEL POSITIONIERBAREN KAMERA UND ZUGEHÖRIGE SYSTEME
VÉHICULE DE TRAVAIL AVEC UNE CAMÉRA POSITIONNABLE VARIABLE ET SYSTÈMES ASSOCIÉS

(30) Priority: 25.07.2018 US 201816044871
(43) Date of publication of application: 29.01.2020
(73) Proprietor: CNH Industrial Italia S.p.A., 10135 Torino (IT)
(72) Inventor: HAGEMAN, Randy, Danville, IOWA 52623 (US); STEWART, Jeffrey, Burlington, IOWA 52601 (US); SUTOR, James, Galesburg, ILLINOIS 61401 (US); ZIESER, Eric James, Wind Point, WISCONSIN 53402 (US)
(74) Representative: CNH Industrial IP Department

(56) References cited:
- WO-A1-2017/164781
- DE-A1- 3 413 584
- JP-A- S59 172 384
- JP-A- 2016 186 205
- US-B1- 6 470 606
- US-B1- 8 272 467

## Description

### FIELD

The present subject matter relates generally to work vehicles, such as excavators and backhoes, and, more particularly, to a variably positionable camera configured to be provided in operative association with an articulable implement of a work vehicle and systems related thereto.

### BACKGROUND

A wide variety of work vehicles have been developed for various purposes. Certain work vehicles may include a backhoe or excavator for transporting large, loose, and/or awkward material. For instance, a backhoe or an excavator may be used to remove large amounts of material such as gravel, dirt, or similar substances. Cabs, sometimes referred to as "operator environments," provide a central location to which controls and operator interfaces may be fed, and from which most or all of the vehicle functions may be easily controlled. The large size and proportions of many work vehicles make it difficult or impossible for a single operator to keep visual contact with the entirety of an associated implement and/or work area during operation. For instance, one or more components of a backhoe, cap structure, or other components may block the operator's view of the work area. As such, some work vehicles include one or more cameras or optical sensors to provide views of the work vehicle's environment and components.

Known imaging systems include one or more cameras positioned at different locations on the work vehicle. For example, U.S. Patent No. 9,871,968 to Douglas Jay Husted et al. (hereinafter "Husted") generally describes an imaging system for an implement. More particularly, Husted describes a two camera system mounted to opposing sides of a machine including a processor to stitch images together to show an orientation and/or position of the implement. Other imaging systems may include a camera on a component of a backhoe. For example, Korean Patent No. 101163289B1 generally shows a camera attached to a boom of a backhoe, providing a visual of the work area to the operator. Other examples can be found in WO2017/164781A1 where it is described a load handling assemply having a camera or JPS59172384A that shows a camera movable along a rail; moreover DE3413584A1and JP2016186205A introduce the idea of a fixed camera for digging purposes; ...

While the above referenced imaging systems have provided some benefits allowing operators to view a work area, further enhancements may still be made to improve the operation of work vehicles, such as vehicles including articulable implements. As such, a more robust and versatile imaging system for work vehicles would be welcome in the art.

### BRIEF DESCRIPTION

Aspects and advantages will be set forth in part in the following description, or may be obvious from the description, or may be learned through practice of the invention. In view of the above, the present invention provides a variably positionable imaging system for a vehicle having an articulable implement, such as an excavator or backhoe, that may increase efficiency of operation, increase safety, and/or reduce risk of damage caused by operation of the vehicle.

In one aspect, the present invention is directed to a work vehicle. The work vehicle includes a body. The body may be a chassis and/or frame of the work vehicle. The work vehicle includes a controllable, articulable implement coupled to the body. For example, the controllable, articulable implement may be coupled to the front, back, sides, or any other appropriate location on the body. The articulable implement includes at least two arms and a tool positioned at a distal end of the articulable implement. In certain embodiments, the articulable implement may be a backhoe, a first arm of the at least two arms may be a boom arm, and a second arm of the at least two arms may be a dipper arm. Further, in such embodiments, the tool may be a bucket. The articulable implement is positionable by an operator of the work vehicle in an operating environment. For example, the articulable implement may by a hydraulically operable implement. Further, the operating environment of the work vehicle may be a cab coupled to or housed within the body, such as the chassis or the frame. The operating environment may include a control interface configured to manipulate the articulable implement.

The work vehicle includes an imaging system. The imaging system includes a display housed within the operating environment of the work vehicle configured to display images of a work area. The display may be a monitor, a LCD screen, a LED screen, a plasma screen, a CRT screen, or any other display known in the art configurable to display images. The work area may generally be the area surrounding the work vehicle such as the front, back, or sides. More particularly, in certain embodiments, the work area may be a trench and a surrounding area being excavated by the articulable implement.

The imaging system includes a track including a rail coupled to at least one of the arms of the articulable implement and extending along a length of the at least one arm. For example, in certain embodiments, the rail may be formed from at least one of a metal, a polymer, or a composite. Further, the rail may be coupled to the at least one arm using any suitable means, such as by adhesives, tape, welding, and/or mechanical fasteners (e.g., bolts, screws, and rivets). The imaging system further includes a camera operatively coupled to the track. In certain embodiments, the camera may be magnetically coupled to the track. For example, the camera and track may each include a ferrous material. It should be appreciated that at least one of the ferrous materials may be magnetized. As such, the magnetized ferrous material may be configured to adhere the camera to the track.

The camera is communicatively coupled with the display. The camera captures at least one image of the work area and communicates the image to the display. In further embodiments, the camera may communicate a series of images to the display such that the camera communicates a video to the display. In addition, the camera is positionable at a plurality of locations along the rail to capture images of the work area. For example, the rail may define a plurality of discrete locations for positioning the camera. In other embodiments, the camera may be variably positioned and/or secured at any location along the rail.

In one embodiment, the imaging system may further include an attachment structure configured between the rail and the camera such that the camera is slidable along the track. For instance, the attachment structure may include a male-female interface. In certain embodiments, a male half of the male-female interface may include a protrusion positioned on the rail or the camera, and the female half of the male-female interface may include a channel positioned on the other of the rail or the camera. For example, the protrusion may be a dovetail coupled to or formed integrally with the camera. In such an embodiment, the channel may be a slot configured to receive the dovetail.

In certain embodiments, a camera housing may surround the camera. As such, the camera housing may be positioned between the camera and the track such that the camera is coupled to the track via the camera housing. For example, the camera housing may include one of the protrusion or the channel coupled to or formed integrally with the camera housing. Further, the camera housing may define one or more viewing apertures or slots configured to allow the camera to capture images of the work area from within the camera housing. In one embodiment, the camera housing may include an open side configured to provide a sight line between the work area and the camera. In still other embodiments, the camera housing may include at least one partially transparent wall configured to provide a sight line between the work area and the camera. The transparent wall may be formed from a plastic material, a glass material, or any other material or combination of materials that substantially allow the line of sight between the camera and the work area.

In embodiments where the imaging system includes the camera housing, the camera may be variably positionable within the camera housing. For example, the camera housing may include one or more actuators configured to change a position and/or orientation of the camera relative to walls of the camera housing. In one embodiment, the camera may be positioned between viewing apertures or slots in the camera housing to provide the sight line between the camera and the work area. Still, in other embodiments, the camera may be repositioned along a length of the slot. In another embodiment, the camera may be rotatable about at least one axis orthogonal to the track. For example, the imaging system may include at least one of the actuators, such as a gimbal, configured to allow the camera to rotate.

In one embodiment, the imaging system may further include a means for selectively fixing the camera to the rail. For example, the imaging system may include at least one of a clamp, a depressible tab-hole interface, a bolt-hole interface, or a tab-notch interface. In one embodiment, a plurality of means for selectively fixing the camera to the rail may each be positioned at each of the plurality of locations such that the camera is selectively fixable at each of the plurality of locations. Still, in another embodiment, the camera or camera housing may include the means for selectively fixing the camera to the rail such that the camera is fixable at varied locations along the length of the rail.

In a further embodiment, the track may include opposing end caps at opposing ends of the rail such that the opposing end caps define end locations along the track. For example, the end caps may each define a boundary limit that the camera may not be positioned past during normal operation. In another embodiment, the track may include an open end at one end of the rail such that the camera may be slid out of the track.

In a still further embodiment, the imaging system may include a motor drivingly coupled to the camera such that the motor positions the camera between the plurality of locations. For example, the motor may be positioned between the camera and the rail such that the motor positions the camera along the track. In another embodiment, the motor may be coupled to one of the at least two arms and drivingly coupled to the camera via at least one of a belt or a chain. In additional embodiments, the operating environment may further include a camera control communicatively coupled to the motor such that the camera control communicates a signal to position the camera between the plurality of locations. For instance, the operating environment may include at least one of a joystick or direction pad for positioning the camera between the plurality of locations. In one particular embodiment, the camera control may be an active camera control such that the active camera control positions the camera between the plurality of locations based on the position and/or orientation of the articulable implement relative to the work area. In such embodiments, the active camera control may include one or more of a processor, a memory device, a network interface, or a sensor. The active camera control may be configured to determine an orientation and/or position of the camera, the articulable implement, and/or the work area relative to each other and position the camera between the plurality of locations to capture images of the work area.

In additional embodiments, the imaging system may include one of a wireless or wired communicative link between the camera and the display. For example, the wireless or wired communicative link may include at least one of wireless communication (e.g., Bluetooth), a cable, a spiral cable, a bulkhead cable, or the rail. It should be recognized that the wireless or wired communicative link may be configured to communicate the image to the display as well as communicate control signals between the camera control and the motor. Further, the imaging system may include a power link for providing an electric current to at least one of the camera or the motor.

In embodiments where the articulable implement is a backhoe, the track may be coupled to at least one of a bottom section or a top section of at least one of the boom arm or the dipper arm. In other embodiments, the track may be coupled to any side or section of the boom arm or the dipper arm. In embodiments where the track is coupled to a top section of the articulable implement, the camera may additionally be configured as a backup camera. In one embodiment, the work vehicle may be a tractor loader backhoe. For example, the tractor loader backhoe may include the backhoe at a back side of the tractor loader backhoe and a front loader at a front side of the tractor loader backhoe. In a further embodiment, the imaging system may further include a second track including a second rail coupled to at least one of the arms of the articulable implement and extending along a length of the at least one the arm. In such an embodiment, a second camera may be coupled to the second track. Further, the second camera may be communicatively coupled with the display. For example, the second camera may capture at least one image of the work area and communicate the image to the display. In addition, the second camera may be positionable at a plurality of locations along the second rail to capture images of the work area.

These and other features, aspects and advantages will become better understood with reference to the following description and appended claims. The accompanying drawings, which are incorporated in and constitute a part of this specification, illustrate embodiments of the invention and, together with the description, serve to explain certain principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended FIGS., in which:
FIG. 1 illustrates a side view of one embodiment of a work vehicle according to aspects of the present disclosure, particularly illustrating the work vehicle with an imaging system;
FIG. 2 illustrates a close-up, partial side view of an articulable implement of the work vehicle of FIG. 1 according to aspects of the present disclosure, particularly illustrating a track of the imaging system coupled to the articulable implement;
FIG. 3 illustrates a close up view of an arm of the articulable implement with the track according to aspects of the present disclosure, particularly illustrating a plurality of locations at which the camera may be located to capture images of the work area;
FIG. 4 illustrates a close-up view of an attachment structure between the camera and the track according to aspects of the present disclosure, particularly illustrating a male-female interface attachment structure;
FIG. 5 illustrates a close-up view of the track of the imaging system according to aspects of the present disclosure, particularly illustrating a plurality of fixing structures;
FIG. 6 illustrates a close-up view of another embodiment of the track of the imaging system according to aspects of the present disclosure, particularly illustrating a camera with a fixing structure;
FIG. 7 illustrates a close-up view of another embodiment of the track of the imaging system according to aspects of the present disclosure, particularly illustrating a camera that is rotatable on the track;
FIG. 8 illustrates a close-up view of another embodiment of the track of the imaging system according to aspects of the present disclosure, particularly illustrating a motor drivingly coupled between the camera and the track;
FIG. 9 illustrates a close-up view of a further embodiment of the track of the imaging system according to aspects of the present disclosure, particularly illustrating a motor drivingly coupled to the camera via a belt;
FIG. 10 illustrates a close-up view of the camera of the imaging system according to aspects of the present disclosure, particularly illustrating the camera within a camera housing;
FIG. 11 illustrates a close-up view of another embodiment of the camera of the imaging system according to aspects of the present disclosure, particularly illustrating an attachment structure between the rail and the camera housing;
FIG. 12 illustrates a close-up view of another embodiment of the camera of the imaging system according to aspects of the present disclosure, particularly illustrating the camera housing with an open side configuration;
FIG. 13 illustrates a further embodiment of the imaging system according to aspects of the present disclosure, particularly illustrating a camera control of the imaging system; and
FIG. 14 illustrates another embodiment of the camera control of the imaging system according to aspects of the present disclosure, particularly illustrating an embodiment where the camera control is an active camera control.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first" and "second" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The terms "communicate," "communicating," "communicative," and the like refer to both direct communication as well as indirect communication such as through a memory system or another intermediary system.

A work vehicle including an imaging system with a track and a camera positionable at a plurality of locations along the track as described herein may increase efficiency of operation, increase safety, and/or reduce risk of damage caused by operation of an implement, such as an excavator or backhoe. Allowing the operator to see a work area while operating a backhoe may allow for more efficient operation. For example, such a work vehicle may make a spotter redundant for operating the backhoe. The operator may also be able to avoid accidents, damage, and/or injury to other people, the work vehicle, and/or other equipment when he/she is able to properly see the work area and/or the backhoe.

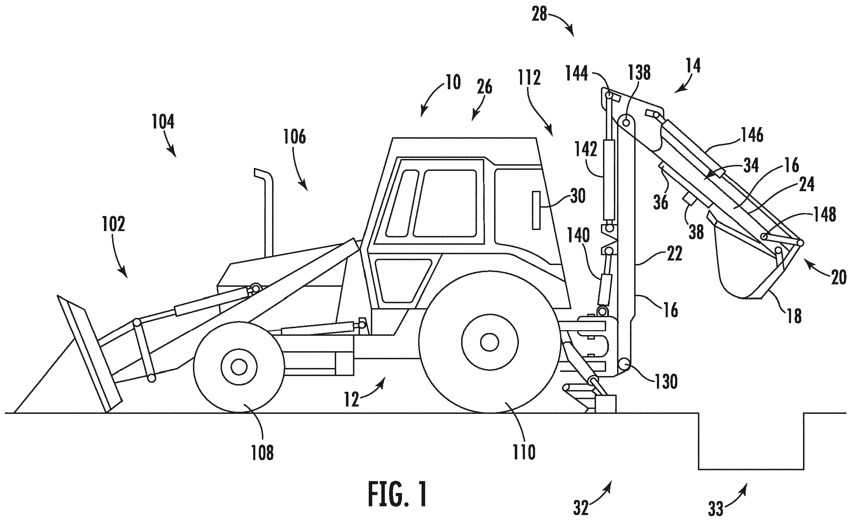

Referring now to the drawings, FIG. 1 illustrates a side view of one embodiment of a work vehicle 10 that may be used with an imaging system 28 in accordance with aspects of the present disclosure. As shown, the work vehicle 10 is configured as a tractor loader backhoe. However, in other embodiments, the work vehicle 10 may be configured as any other suitable work vehicle known in the art, including those for agricultural and construction applications, transport, sport, and/or the like.

The work vehicle 10 includes a body 12. The body 12 may be a chassis and/or frame of the work vehicle 10. In certain embodiments, the body 12 may be a tractor 106. The work vehicle 10 may include a loader 102 and a controllable, articulable implement 14 coupled to the body 12 of the work vehicle. For example, the loader 102 and the articulable implement 14 may be pivotally coupled to the body 12 of the work vehicle 10. Further, in embodiments where the work vehicle 10 is a tractor loader backhoe, the loader 102 may be coupled to a front 104 of the body 12. In such an embodiment, the articulable implement 14 may be a backhoe coupled to a rear 112 of the body 12. It should be recognized that the articulable implement 14 may be coupled to the front 104, back 112, sides, or any other appropriate location on the body 12. In other embodiments, the work vehicle may not include the loader 102. The work vehicle may also include any other tools, implements, and/or components appropriate for use with a work vehicle 10 including an articulable implement 14.

The work vehicle 10 may be supported on front wheels 108 and rear wheels 110 for movement over the ground. Though, in other embodiments, the work vehicle 10 may include any number of wheels or other structures, such as tracks, configured to move the work vehicle 10 relative to the ground. Further, in other embodiments, the work vehicle 10 may be permanently or temporarily fixed to the ground in order to allow operation of the articulable implement 14.

The articulable implement 14 includes at least two arms 16 and a tool 18 positioned at a distal end 20 of the articulable implement 14. In embodiments where the articulable implement 14 is a backhoe, a first arm 22 of the at least two arms 16 may be a boom arm. Further, a second arm 24 of the at least two arms 16 may be a dipper arm. In addition, the tool 18 may be a bucket. For the illustrated embodiment, the first arm 22 may be pivotally coupled to the body 12 by a pivot pin assembly 130. For example, the pivot pin assembly 130 may couple the first arm 22 to the body 12 about a substantially horizontal pivotal axis. The second arm 24 may be pivotally coupled to the upper end of the first arm 22. For example, the second arm 22 may be coupled to the first arm by a pivot pin assembly 138. The pivot pin assembly 138 may define a substantially horizontal pivotal axis about which the second arm 24 pivots with respect to the first arm 22. It should be recognized that the articulable implement may include any number of additional arms 16. Further, the tool 18 may be coupled to the last in a series of arms 16 at the distal end 20 of the articulable implement 14.

The articulable implement 14 may also include a plurality of hydraulic cylinders configured to manipulate the articulable implement. For example, a hydraulic boom cylinder 140 may be coupled between the first arm 22 and the body 12 to pivot the first arm 22 with respect to the body 12. Further, a hydraulic dipper cylinder 142 may be coupled between the first arm 22 and the second arm 24 to pivot the second arm 24 with respect to the first arm 22 when the hydraulic dipper cylinder 142 extends and retracts. The upper end of the hydraulic dipper cylinder 142 may be pivotally coupled to the second arm 24 by a pivot pin assembly 144. The pivot pin assembly 144 may extend through openings in both the second arm 24 and the upper end of the hydraulic dipper cylinder 142. The articulable implement 14 may also include a hydraulic bucket cylinder 146 that is pivotally coupled between the second arm 24 and the tool 18 to pivot the tool 18 with respect the second arm 24. A pivot pin assembly 148 may define a substantially horizontal pivotal axis between the second arm 24 and the tool 18.

The articulable implement 14 is positionable by an operator of the work vehicle 10 in an operating environment 26. For instance, the operating environment 26 of the work vehicle 10 may be a cab coupled to or housed within the body 12, such as the chassis or the frame. The articulable implement 14 may by a hydraulically operable implement. For example, the articulable implement 14 may be operated by manipulating any of the hydraulic cylinders 140, 142, 146. The operating environment 26 may include a control interface configured to manipulate the articulable implement 14. Articulable implements 14 including arms 16 and tools 18 for a work vehicle 10 as well as their operation, construction, and control are well known and understood in the art. As such, a detailed description of the operation of such articulable implements is unnecessary for an appreciation and understanding of the present subject matter and is excluded herein.

Still referring to FIG. 1, the work vehicle 10 includes an imaging system 28. The imaging system 28 includes a display 30 housed within the operating environment 26 of the work vehicle 10 and is configured to display images of a work area 32. The work area 32 may generally be the area surrounding the work vehicle 10 such as the front 104, rear 112, or sides of the vehicle 10. More particularly, in certain embodiments, the work area 32 may include a trench 33 and a surrounding area being excavated by the articulable implement 14. The display 30 may be a monitor, a LCD screen, a LED screen, a plasma screen, a CRT screen, or any other display known in the art configurable to display images. Further, the display 30 may be positioned in the operating environment 26 such that an operator can monitor both the display 30 and any parts of the articulable implement 14 and/or work area 32 viewable from the operating environment 26. For example, the display 30 may be positioned at the rear 112 of the operating environment 26.

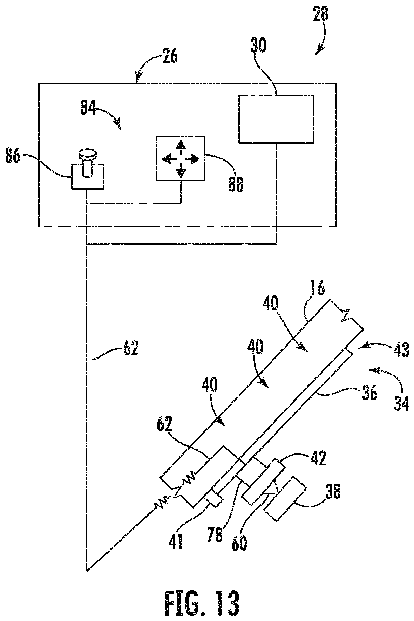

The imaging system 28 includes a track 34 having a rail 36 coupled to at least one of the arms 16 of the articulable implement 14 and extending along a length of the at least one arm 16. For example, in the embodiment shown, the rail 36 is coupled to the second arm 24. The imaging system 28 further includes a camera 38 operatively coupled to the track 34. The camera 38 is communicatively coupled with the display 30 (as described in more detail with reference to FIG. 13). The camera 38 captures at least one image of the work area 32 and communicates the image to the display 30. In further embodiments, the camera 38 may communicate a series of images to the display 30 such that the camera 38 communicates a video to the display 30. The camera 38 may generally be any suitable camera, optical sensor, and/or video camera configurable to capture images of the work area 32. In further embodiments, the camera 38 may be an infrared camera such that the camera 38 may capture images in low lighting conditions. Still further, at least one of the camera 38 or the articulable implement 14 may include a light source configured to illuminate the work area 32.

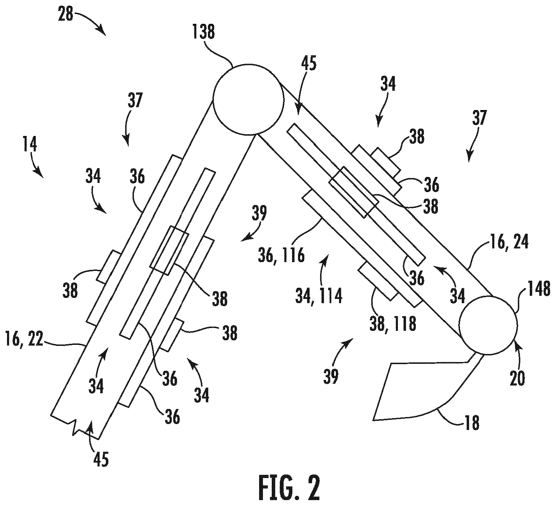

Referring now to FIG. 2, one embodiment of the articulable implement 14 is illustrated in accordance to aspects of the present disclosure. Particularly, FIG. 2 illustrates the articulable implement 14 with the track 34 of the imaging system 28 coupled to the articulable implement 14 at various locations along the arms 16. It should be recognized that the articulable implement 14 may be configured generally the same as the articulable implement 14 of FIG. 1. For example, the articulable implement 14 may include the first arm 22 and the second arm 24 coupled together by the pivot pin assembly 138 and the tool 18 coupled to the second arm 24 by the pivot pin assembly 148. Though, in other embodiments, the articulable implement 14 may have any other suitable configuration.

In the depicted embodiment, the track 34 is shown coupled to the arms 16 at multiple positions. For instance, the track 34 may be coupled to the arm 16 at a top section 37 of the articulable implement 14. The track 34 may also be coupled to a bottom section 39 of the articulable implement 14. Still, in further embodiments, the track may be coupled to one or more side portions 45 of the articulable implement 14. In certain embodiments, the track 34 and camera 38 coupled to the bottom section 39 may allow a relatively unobstructed view of the tool 18 and/or the work area 32, such as the trench 33 (see, e.g., FIG. 1). In other embodiments, the track 34 and camera 38 coupled to the top section 37 may provide images of the work area 32 as well as other desirable images. For example, in embodiments where the articulable implement 14 is a backhoe, the track 34 may be coupled to the top section 37 of at least one of the boom arm or the dipper arm. In embodiments where the track 34 is coupled to a top section 37 of the articulable implement 14, the camera 38 may additionally be configured as a backup camera. For instance, the camera 38 may communicate images from the rear 112 of the work vehicle 10 to assist the operator in backing up the work vehicle 10. In other embodiments, the track 34 may be coupled to any side section 45 of the boom arm or the dipper arm.

It should also be recognized that the track 34 may have any length. In certain embodiments, a length of the track 34 may be less than a length of the arm 16 the track 34 is coupled to. In one embodiment, the length of the track 34 may be between 0.3048 and 1,524 metres (one (1) and five (5) feet) For example, the track 34 may be between two (2) feet and four (4) feet in length. Further, the track 34 may be positioned at any desirable positon along the length of the arm 16.

The rail 36 of the track 34 may generally be formed from at least one of a metal, a polymer, a composite, or any other suitable material. Further, the rail 36 may be coupled to the arm 16 using any suitable means, such as by adhesives, tape, welding, and/or mechanical fasteners (e.g., bolts, screws, and rivets).

In a further embodiment, the imaging system 28 may include a second track 114 including a second rail 116 coupled to at least one of the arms 16 of the articulable implement 14 and extending along the length of the at least one the arm 16. For example, the second track 114 may be coupled to the articulable implement 14 at any positioned described herein. Further, a second camera 118 may be coupled to the second track 114. The second camera 118 may be communicatively coupled with the display 30. For example, the second camera 118 may capture at least one image of the work area 32 and communicates the image to the display 30.

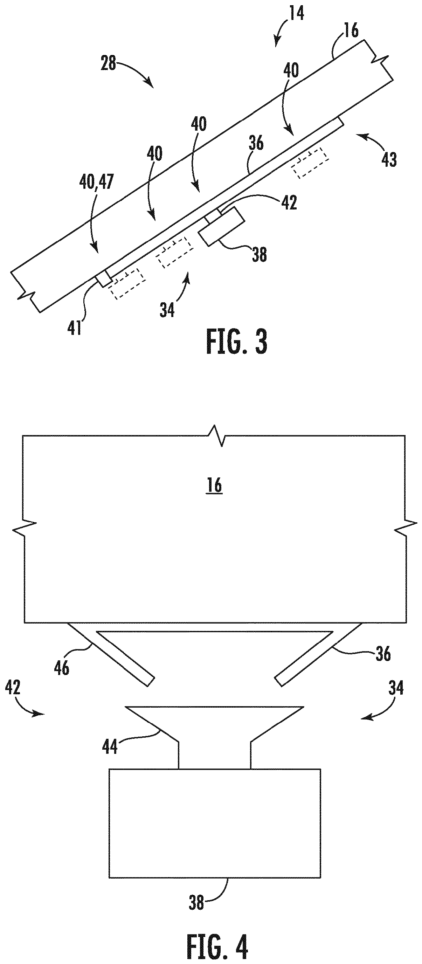

Referring now to FIG. 3, one embodiment of the imaging system 28 is illustrated in accordance with aspects of the present disclosure. Particularly, FIG. 3 illustrates locations 40 where images of work area 32 may be captured. As shown, the camera 38 is positionable at a plurality of locations 40 along the track 34 to capture images of the work area 32. Particularly, the camera 38 is shown in phantom positioned at several locations 40 along the rail 36 of the track 34. In certain embodiments, the track 34 may define a plurality of discrete locations 40 to position the camera 38. In other embodiments, the camera 38 may be variably positioned and/or secured at any desired location 40 along the rail 36.

In certain embodiments, the camera 38 may be magnetically coupled to the rail 36. For example, the camera 38 and track 34, or components thereof, may each include a ferrous material. It should be appreciated that at least one of the ferrous materials may be magnetized. As such, the magnetized ferrous material may be configured to adhere the camera 38 to the rail 36. Further, the camera 38 may be lifted from the rail 36 and repositioned at any desirable location 40 along the track 34.

In one embodiment, the imaging system 28 may further include an attachment structure 42 configured between the rail 36 and the camera 38 such that the camera 38 is slidable along the track 34. For instance, the attachment structure may include a male-female interface. Although, in other embodiments, it should be recognized that the attachment structure 42 may include discrete couplings such that the camera is liftable and movable along the track 34. For example, the attachment structure 42 may include a threaded bold interface such that the camera is fastenable at discrete locations 40 along the rail 36.

In embodiments where the camera 38 is slidable along the track 34, the track 34 may include at least one end cap 41 at an end of the rail 36. For example, the end cap 41 may define a boundary limit that the camera 38 may not be positioned past during normal operation. As such, the position of the end cap 41 may be an end location 47 where images of the work area 32 may be captured. In a further embodiment, the track 34 may include opposing end caps 41 at opposing ends of the rail 36 such that the opposing end caps 41 each define an end location 47 along the track 34. In certain embodiments, the end cap(s) 41 may include a locking mechanism to prevent the end cap(s) 41 from being removed and theft of the camera 38. Additionally, as shown in the illustrated embodiment, the track 34 may include an open end 43 at one end of the rail 36 such that the camera 38 may be slid out of the track 34. Sliding the camera 38 off the track 34 may be desirable to prevent theft of the camera 38, damage to the camera 38 during certain operations, and/or to position the camera 38 on another track 34. In other embodiments, the open end 43 may be operable with a locking mechanism. For example, the open end 43 may define a hole configured to receive a padlock or similar locking mechanism. As such, the locking mechanism may protect the camera 38 from theft.

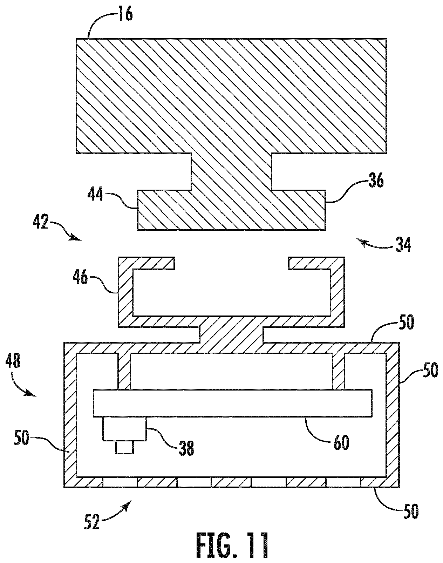

Referring now to FIG. 4, one embodiment of the attachment structure 42 described above with reference to FIG. 3 is illustrated in accordance with aspects of the present disclosure. Particularly, FIG. 4 illustrates the attachment structure 42 configured as a male-female interface. In certain embodiments, a male half of the male-female interface may include a protrusion 44 positioned on the rail 36 or the camera 38. For example, in the depicted embodiment, the protrusion 44 is coupled to the camera 38. A female half of the male-female interface may include a channel 46 positioned on the other of the rail 36 or the camera 38. For example, the channel 46 may be coupled to the rail 36. In other embodiments, the rail 36 may be formed into the shape of the channel 46 or the protrusion 44. For instance, in the illustrated embodiment, the rail 36 is formed as the channel 46. In other embodiments, the protrusion 44 may be positioned on or formed with the rail 36 while the channel 46 is positioned on the camera 38 (see, e.g., FIG. 11).

It should be recognized that the protrusion 44 may have any shape slidable inside of the channel 46. For example, the protrusion 44 may include a triangle cross-section, a trapezoid cross-section, a "T" cross-section, or any other suitable cross-section. The channel 46 may have any complementary shape configured to receive the protrusion 44 and secure the protrusion 44 within the channel 46. In one embodiment, the protrusion 44 may be a dovetail coupled to or formed integrally with the camera 38. In such an embodiment, the channel 46 may be slot configured to receive the dovetail.

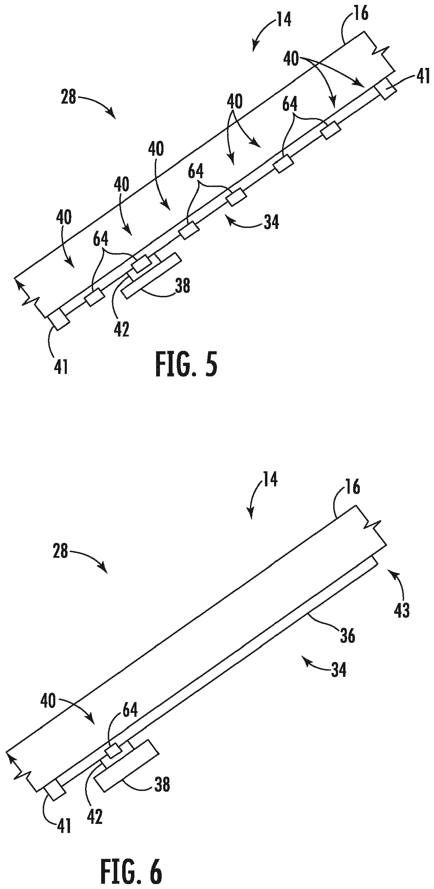

Referring now to FIG. 5, one embodiment of the track 34 of the imaging system 28 is illustrated according to aspects of the present disclosure. Particularly, FIG. 5 illustrates the track 34 including fixing structures 64. In one embodiment, the imaging system 28 may include a means for selectively fixing the camera 38 to the rail 36. In certain embodiments, the means for selectively fixing the camera 38 to the rail 36 is a fixing structure 64. For example, the track 34 may include one or more fixing structures 64 at the discrete locations 40 such that the camera 38 is fixable at each of the plurality of locations 40. In certain embodiments, the fixing structures may include at least one of a clamp, a depressible tab-hole interface, a bolt-hole interface, or a tab-notch interface.

Referring now to FIG. 6, one embodiment of the track 34 and camera 38 is illustrated according to aspects of the present disclosure. Particularly, FIG. 6 illustrates the imaging system 28 where the fixing structure 64 is coupled to the camera 38. In the embodiment shown, the camera 38 may include the means for selectively fixing the camera 38 to the rail 36 such that the camera 38 is fixable at varied locations along the length of the track 34. It should be recognized that including the fixing means on the camera 38 may allow the camera 38 to be positioned at any desirable location 40 along the track 34. For example, the camera 38 is not restricted to fixed, discrete locations 40 on the track 34. In certain embodiments, the means for selectively fixing the camera 38 to the rail 36 is the fixing structure 64. For example, at least one of the camera 38 or the attachment structure 42 may include one or more fixing structures 64 such that the camera 38 is fixable at various locations 40 along the track 34. As such, the camera 38 may be slid along the track 34 and fixed at a desirable location 40 to provide images of the work area 32. In certain embodiments, the fixing structure 64 may include at least one of a clamp or bolt configured to prevent the camera 38 from sliding on the track 34. For instance, the fixing structure 42 may use friction to prevent the camera 38 from sliding on the track 34.

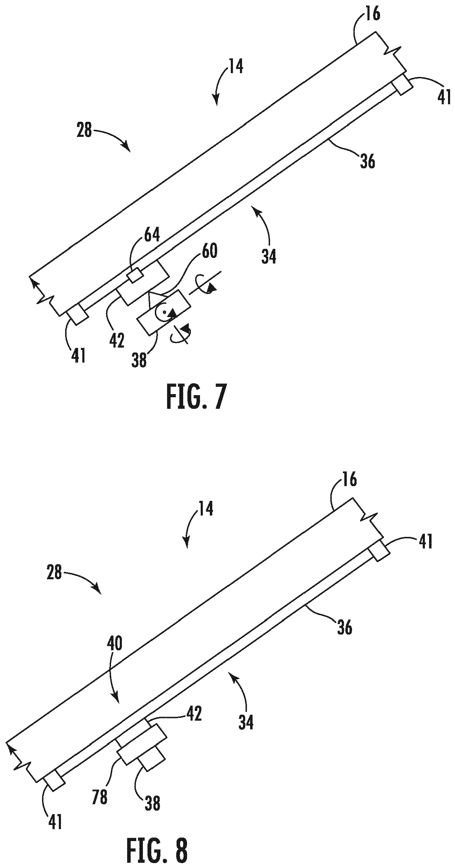

Referring now to FIG. 7, a further embodiment of the imaging system 28 is illustrated according to aspects of the present disclosure. Particularly, FIG. 7 illustrates the imaging system 28 where the camera 38 is a rotatable camera. In the depicted embodiment, the camera 38 may be rotatable about at least one axis orthogonal to the track 34. For example, the imaging system 28 may include at least one actuator 60 configured to allow the camera 38 to rotate. In one embodiment, the actuator 60 may be a gimbal such that the camera 38 is rotatable about one axis. In a further embodiment, the actuator 60 may be a gyroscope including multiple gimbals (e.g., three or more gimbals) such that the camera 38 is rotatable about all three axes.

Referring now to FIG. 8, one embodiment of the imaging system 28 including a motor 78 is illustrated according to aspects of the present disclosure. In the depicted embodiment, the imaging system 28 may include the motor 78 drivingly coupled to the camera 38 such that the motor 78 positions the camera 38 between the plurality of locations 40. For example, the motor 78 may be positioned between the camera 38 and the rail 36 such that the motor 78 positions the camera 38 along the track 34. In one embodiment, the motor 78 may be coupled between the attachment structure 42 and the camera 38. In another embodiment, the motor 78 may be coupled between the rail 36 and the attachment structure 42. Still, in a further embodiment, the motor 78 may directly couple the camera 38 to the rail 36. In certain embodiments, the motor 78 may include a gear operable with the rail 36 such that turning the gear slides the camera 38 along the track 34. For example, the motor 78 may be powered to turn the gear and position the camera 38 at a desired location 40 along the rail 36.

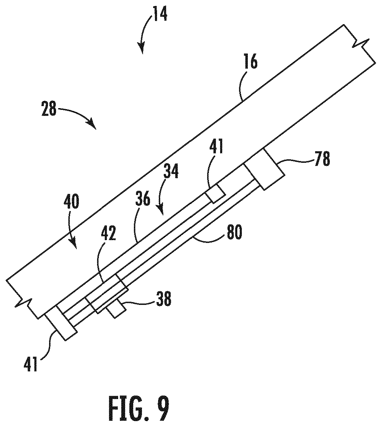

Referring now to FIG. 9, an embodiment of the imaging system 28 where the motor 78 is coupled to the arm 16 of the articulable implement 14 is illustrated according to aspects of the present disclosure. In such an embodiment, the motor 78 may be drivingly coupled to the camera 38 via a belt 80. It should be appreciated that, in other embodiments, the motor 78 may be drivingly coupled to the camera 38 via any suitable structure, such as a chain, pulley, track, or gear system. For instance, the belt 80 may drivingly couple the motor 78 to a gear positioned between the camera 38 and the rail 36 such that driving the belt 80 also positions the camera 38 between locations 40. In other embodiments, the motor 78 may have any other configuration that allows the motor 78 to slide the camera 38 along the track 34.

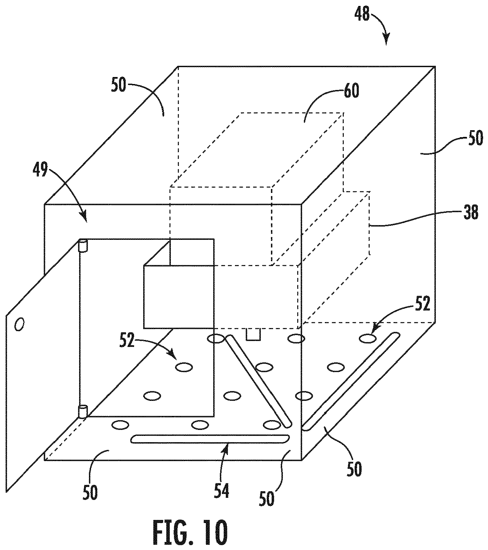

Referring now to FIG. 10 one embodiment of the camera 38 is illustrated according to aspects of the present disclosure. Particularly, FIG. 10 illustrates a camera 38 positioned within a camera housing 48. As illustrated, in certain embodiments, the camera housing 48 may surround the camera 38. For example, the camera housing 48 may include a number of walls 50 assembled around the camera 38. Further, in certain embodiments, the camera 38 may be coupled to one or more of the walls 50. It should be recognized that the camera housing 48 may protect the camera 38 from accidental contact that may damage the camera 38, prevent dirt and debris from blocking a lens of the camera 38, and/or prevent the camera 38 from being accidentally oriented such that the camera 38 does not capture image(s) of the work area 32. In the depicted embodiment, the camera housing 48 has a rectangular shape, or, more particularly, the camera housing 38 may have a square shape. It should be appreciated that, in other embodiments, the camera housing 48 may have any other suitable configuration or shape to house the camera 38.

The camera housing 48 may define one or more viewing apertures 52 or slots 54 configured to allow the camera 38 to capture images of the work area 32 from within the camera housing 48. For example, a wall 50 positioned at a bottom of the camera housing 48 may define the viewing aperture(s) 52 and/or the slot(s) 54 in order to provide a sight line between the camera 38 and the work area 32. In other embodiments, the camera housing 48 may define any other apertures, slits, holes, or voids suitable for allowing the camera 38 to capture images of the work area 32 through the camera housing 48.

The camera 38 may be variably positionable within the camera housing 48. In certain embodiments, the camera housing 48 may include an access panel 49 defined through one of the walls 50. For instance, the access panel 49 may allow the operator to manually position the camera 38 between viewing apertures 52, slots 54, or the like, to provide better images of the work area 32. Still further, the operator may position the camera 38 between different positons along a length of the slot(s) 54. In another embodiment, the camera housing 48 may include one or more actuators 60 configured to change a position and/or orientation of the camera 38 relative to the walls 50 of the camera housing 48. For example, the actuator(s) 60 may be coupled between the camera 38 and the camera housing 48. One embodiment of the actuator(s) 60 may include a servo motor and a track system configured to change an orientation and/or alignment of the camera 38 relative to the camera housing 48. Still, in other embodiments, the actuator(s) 60 may have any other configuration suitable to change the position and/or orientation of the camera 38 within the camera housing 48. It should be recognized that the actuator(s) 60 may both position and/or orient the camera 38 within the camera housing 48 as well as rotate the camera 38 as described in reference to FIG. 7. For example, one or more actuators 60 within the camera housing 48 may be gimbals.

Referring now to FIG. 11, one embodiment of the camera 38 operatively coupled to the track 34 is illustrated according to aspects of the present disclosure. Particularly, FIG. 11 illustrates the rail 36 coupled to the camera 38 via the camera housing 48. In one embodiment, the rail 36 may be coupled to the camera housing 48 via the attachment structure 42, such as that described above with reference to FIGS. 3-9. For example, the camera housing 48 may include one of a protrusion 44 or a channel 46 operable with another one of a protrusion 44 or channel 46 included in the track 34. It should be recognized that, in certain embodiments, the protrusion 44 and/or channel 46 may be formed integrally with or coupled to a wall 50 of the camera housing 48.

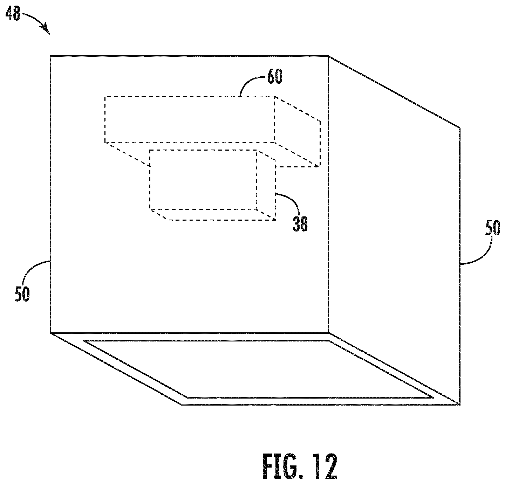

Referring now to FIG. 12, one embodiment of a camera housing 48 is illustrated in accordance with aspect of the present subject matter. Particularly, FIG. 12 illustrates the camera housing 48 with an open side configuration. Such a configuration may allow for the camera 38 to capture images of the work area 32 without viewing apertures 52 and/or slots 54. For example, the camera housing 48 may be configured such that there is an open side to the camera housing 48. In one embodiment, the camera housing 48 may not include a wall 50 at a bottom of the camera housing 48. In still other embodiments, the camera housing 48 may include at least one wall 50 configured as an at least partially transparent wall. Further, the at least partially transparent wall may provide a sight line between the work area 32 and the camera 38. The at least partially transparent wall may include a plastic material, a glass material, or any other material or combination of materials that substantially allow a line of sight between the camera 38 and the work area 32. It should be recognized that, in certain embodiments, the wall 50 at the bottom of the camera housing may be substantially fully transparent. Further, in additional embodiments, the wall 50 at the bottom of the camera housing 48 may be curved. For example, a fully or partially transparent wall may define at least a portion of a sphere.

Referring now to FIG. 13, one embodiment of the imaging system 28 is illustrated in accordance with aspects of the present subject matter. Particularly, FIG. 13 illustrates the imaging system 28 including a camera control 84. In the depicted embodiment, the camera control 84 is positioned in the operating environment 26 (see, e.g., FIG. 1) of the work vehicle 10. For example, the camera control 84 may be positioned such that an operator can manipulate the camera control 84 while viewing the display 30. The camera control 84 may be communicatively coupled to the motor 78 such that the camera control 48 communicates a signal to position the camera 38 between the various locations 40. For example, the motor 78 may position the camera 38 to a different position along the track 38 as described generally with reference to FIGS. 8 and 9. The camera control 84 may include at least one of a joystick 86 or direction pad 88 for positioning the camera between the plurality of locations 40. Though, in other embodiments, any component may be manipulated by the operator to communicate signals to the imaging system 28.

It should also be recognized that, in certain embodiments, the camera control 84 may communicate a signal to manipulate the actuator(s) 60. For example, the camera control 84 may communicate a signal to rotate the camera 38 utilizing the actuator(s) 60 as described above with reference to FIG. 7. Further, the camera control 48 may communicate a signal to the actuator(s) 60 to change a position and/or orientation of the camera 38 relative to the walls 50 of the camera housing 48, such as described above with reference to FIGS. 10 and 11. For example, the camera control 84 may communicate a signal to position the camera 38 between the viewing apertures 52 and/or slots 54.

Still referring to FIG. 13, the imaging system 28 may include one of a wireless or wired communicative link 62 between the camera 38 and the display 30. For example, the wireless or wired communicative link 62 may include at least one of wireless communication (e.g., Bluetooth), a cable, a spiral cable, a bulkhead cable, or the rail. For example, in embodiments where the rail 36 includes a metal, the rail 36 may additionally be used to communicate electrical signals. In another embodiment, a spiral cable may allow for a wired communicative link 62 to extend and retract to the various locations 40 while reducing excessive slack in the line. It should be recognized that the wireless or wired communicative link 62 may be configured to communicate the image to the display 30 as well as communicate control signals between the camera control 84 and the motor 78 and/or the actuator(s) 60. Further, the imaging system 28 may include a power link for providing an electric current to at least one of the camera 38, the motor 78, or the actuator(s) 60. It should be recognized that, in certain embodiments, a wired communicative link 62 may also be the power link.

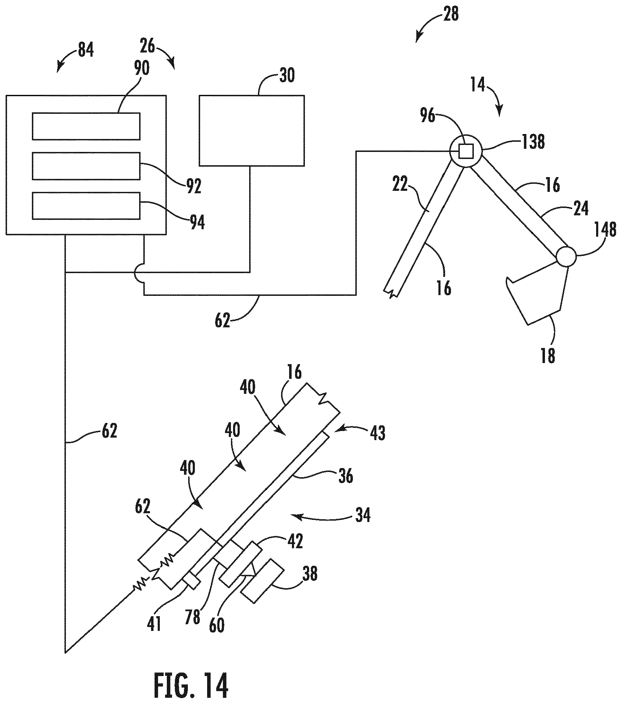

Referring now to FIG. 14, another embodiment of the imaging system 28 is illustrated according to aspects of the present subject matter. Particularly, FIG. 14 illustrates an embodiment where the camera control 84 is an active camera control. The active camera control may be configured to determine an orientation and/or position of the camera 38, the articulable implement 14, and/or the work area 32 relative to each other and position the camera 38 between the plurality of locations 40 to capture images of the work area 32. For instance, the active camera control may communicate signals to position the camera 38 between the plurality of locations 40 based on the position and/or orientation of the articulable implement 14 relative to the work area 32. It should be recognized that the camera 38 may be positioned by manipulating at least one of the motor 78 or the actuator(s) 60. In certain embodiments, the active camera control may be communicatively coupled to the control interface configured to manipulate the articulable implement 14. For example, the control interface may communicate an orientation and/or position of the arms 16 of the articulable implement 14. In other embodiments, as illustrated, the imaging system 28 may include a sensor 96 configured to communicate data indicative of the relative positon and/or orientation of the articulable implement 14 relative to the work area 32. In one instance, one or more sensors 96 may be operable with one or more pin assemblies 130, 144, 138, 148. For example, as shown, a sensor 96 may be operable with the pivot pin assembly 138 to determine the relative orientation and/or position between the first arm 22 and the second arm 24.

The active camera controller generally includes a network interface 94. The network interface 94 may be operable with any suitable wired or wireless communications network for communicating data with other components of, e.g., the imaging system 28, and/or other components or systems not depicted. For the embodiment depicted, the network interface 94 may utilize the communicative link 62 to communicate data with other components. Specifically, for the embodiment shown, the network interface 94 of the camera control 84 may be operably coupled to the one or more motors 78 and/or the actuators 60. In such a manner, the camera control 84 may control operation of the imaging system 28.

Referring still to FIG. 14, the camera control 84 further includes one or more processors 90 and memory devices 92. The memory device 92 stores data accessible by the one or more processors 90. The one or more processor(s) 90 can include any suitable processing device, such as a microprocessor, microcontroller, integrated circuit, logic device, and/or other suitable processing device. The one or more memory device(s) 92 can include one or more computer-readable media, including, but not limited to, non-transitory computer-readable media, RAM, ROM, hard drives, flash drives, and/or other memory devices. The data may include instructions that when executed by the one or more processors 90 cause the imaging system 28 to perform functions. One or more exemplary aspects of these functions may be described above with respect to the embodiments of FIGS. 7-13.

The instructions within the data can be any set of instructions that when executed by the one or more processor(s) 90, cause the one or more processor(s) 90 to perform operations. In certain exemplary embodiments, the instructions within the data can be software written in any suitable programming language or can be implemented in hardware. Additionally, and/or alternatively, the instructions can be executed in logically and/or virtually separate threads on processor(s) 90. The memory device(s) 92 can further store other data that can be accessed by the processor(s) 90.

This written description uses exemplary embodiments to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A work vehicle (10), the work vehicle (10) comprising, a body (12), a controllable, articulable implement (14) coupled to the body (12), the articulable implement (14) including at least two arms (16) and a tool (18) positioned at a distal end (20) of the articulable implement (14), wherein the articulable implement (14) is positionable by an operator of the work vehicle (10) in an operating environment (26), the work vehicle (10) further comprising:
an imaging system (28) comprising:
a display (30) housed within the operating environment (26) of the work vehicle (10) configured to display images of a work area (32);
a track (34) including a rail (36) coupled to at least one of the arms (16) of the articulable implement (14) and extending along a length of the at least one arm (16); and
a camera (38) coupled to the track (34), the camera (38) communicatively coupled with the display (30), wherein the camera (38) captures at least one image of the work area (32) and communicates the image to the display (30),
wherein the camera (38) is positionable at a plurality of locations (40) along the rail (36) to capture images of the work area (32);
the work vehicle being **characterized in that** the articulable implement (14) is a backhoe, a first arm (22) of the at least two arms (16) is a boom arm, and a second arm (24) of the at least two arms (16) is a dipper arm, and wherein the track (34) is coupled to at least one of a bottom section (39) or a top section (37) of at least one of the boom arm or the dipper arm.

2. The work vehicle (10) of claim 1, wherein the imaging system (28) further comprises:
an attachment structure (42) positioned between the rail (36) and the camera (38) such that the camera (38) is slidable along the track (34).

3. The work vehicle (10) of claim 2, wherein the attachment structure (42) includes a male-female interface.

4. The work vehicle (10) of claim 3, wherein a male half of the male-female interface includes a protrusion (44) positioned on the rail (36) or the camera (38), and wherein the female half of the male-female interface includes a channel (46) positioned on the other of the rail (36) or the camera (38).

5. The work vehicle (10) of any of the preceding claims, wherein the imaging system (28) further comprises:
a camera housing (48) surrounding the camera (38) and positioned between the camera (38) and the track (34) such that the camera (38) is coupled to the track (34) via the camera housing (48).

6. The work vehicle (10) of claim 5, wherein the camera (38) is positionable within the camera housing (48).

7. The work vehicle (10) of any of the preceding claims, wherein the camera (38) is rotatable about at least one axis orthogonal to the track (34).

8. The work vehicle (10) of any of the preceding claims, wherein the imaging system (28) further comprises a means for selectively fixing the camera (38) to the rail (36).

9. The work vehicle (10) of any of the preceding claims, wherein the track (34) further includes opposing end caps (41) at opposing ends of the rail (36) such that the opposing end caps (41) define end locations (47) along the track (34).

10. The work vehicle (10) of any of the preceding claims, wherein track (34) includes an open end (43) at one end of the rail (36) such that the camera (38) is configured to be slid out of the track (34).

11. The work vehicle (10) of any of the preceding claims, wherein the imaging system (28) includes a motor (78) drivingly coupled to the camera (38) such that the motor (78) positions the camera (38) between the plurality of locations (40).

12. The work vehicle (10) of claim 11, wherein the operating environment (26) further includes a camera control (84) communicatively coupled to the motor (78) such that the camera control (84) communicates a signal to position the camera (38) between the plurality of locations (40).

13. The work vehicle (10) of any of the preceding claims, wherein the work vehicle (10) is a tractor loader backhoe.

## Patentansprüche

1. Arbeitsfahrzeug (10), wobei das Arbeitsfahrzeug (10) ein Fahrgestell (12) und ein steuerbares und schwenkbares Arbeitsgerät (14) umfasst, das mit dem Fahrgestell verbunden ist, wobei das schwenkbare Arbeitsgerät (14) zumindest zwei Arme (16) und ein Werkzeug (18) umfasst, das an einem distalen Ende (20) des schwenkbaren Arbeitsgeräts (14) angeordnet ist, wobei das schwenkbare Arbeitsgerät (14) von einem Nutzer des Arbeitsfahrzeugs (10) in einer Bedienumgebung (26) positionierbar ist, wobei das Arbeitsfahrzeug (10) weiterhin umfasst:
ein bildgebendes System (28) umfassend:
einen Bildschirm (30), der in der Bedienumgebung (26) des Arbeitsfahrzeugs (10) untergebracht ist und der dazu eingerichtet ist, Bilder eines Arbeitsbereichs (32) anzuzeigen;
eine Führung (34) mit einer Schiene (36), die mit zumindest einem der Arme (16) des schwenkbaren Arbeitsgeräts (14) verbunden ist und die sich entlang einer Länge des zumindest einen Arms (16) erstreckt; und
eine Kamera (38), die mit der Führung (34) verbunden ist, wobei die Kamera (38) kommunizierend mit dem Bildschirm (30) verbunden ist, wobei die Kamera (38) ein Bild des Arbeitsbereichs (32) erfasst und das Bild auf den Bildschirm (30) überträgt,
wobei die Kamera (38) an einer Mehrzahl von Stellen (40) entlang der Schiene (36) positionierbar ist, um Bilder des Arbeitsbereichs (32) zu erfassen;
wobei das Arbeitsfahrzeug **dadurch gekennzeichnet ist, dass** das schwenkbare Arbeitsgerät (14) ein Heckbagger ist, wobei ein erster Arm (22) der zumindest zwei Arme (16) ein Auslegerarm ist und wobei ein zweiter Arm (24) der zumindest zwei Arme (16) ein Schaufelarm ist und wobei die Führung (34) mit zumindest einem aus einem Auslegerabschnitt (39) oder einem oberen Abschnitt (37) zumindest eines aus dem Auslegerarm und dem Schaufelarm verbunden ist.

2. Arbeitsfahrzeug (10) nach Anspruch 1, wobei das bildgebende System (28) weiterhin umfasst:
eine Befestigungsanordnung (42), die zwischen der Schiene (36) und der Kamera (38) derart angeordnet ist, dass die Kamera (38) entlang der Führung (34) verschiebbar ist.

3. Arbeitsfahrzeug (10) nach Anspruch 2, wobei die Befestigungsanordnung (42) eine Steckverbindungsschnittstelle umfasst.

4. Arbeitsfahrzeug (10) nach Anspruch 3, wobei die männliche Hälfte der Steckverbindungsschnittstelle einen Vorsprung (44) umfasst, der an der Schiene (36) oder der Kamera (38) angeordnet ist, und wobei die weibliche Hälfte der Steckverbindungsschnittstelle eine Nut (46) umfasst, die an dem anderen aus der Schiene (36) und der Kamera (38) angeordnet ist.

5. Arbeitsfahrzeug (10) nach einem der vorangehenden Ansprüche, wobei das bildgebende System (28) weiterhin umfasst:
ein Kameragehäuse (48), das die Kamera (38) umgibt und zwischen der Kamera (38) und der Führung (34) derart angeordnet ist, dass die Kamera (38) mittels des Kameragehäuses (48) mit der Führung (34) verbunden ist.

6. Arbeitsfahrzeug (10) nach Anspruch 5, wobei die Kamera (38) innerhalb des Kameragehäuses (48) positionierbar ist.

7. Arbeitsfahrzeug (10) nach einem der vorangehenden Ansprüche, wobei die Kamera (38) um zumindest eine Achse senkrecht zur Führung (34) drehbar ist.

8. Arbeitsfahrzeug (10) nach einem der vorangehenden Ansprüche, wobei das bildgebende System (28) weiterhin Mittel zum wahlweisen Befestigen der Kamera (38) an der Schiene (36) umfasst.

9. Arbeitsfahrzeug (10) nach einem der vorangehenden Ansprüche, wobei die Führung (34) weiterhin gegenüberliegende Endkappen (41) an gegenüberliegenden Enden der Schiene (36) umfasst, sodass die gegenüberliegenden Endkappen (41) Endstellungen (47) entlang der Führung (34) definieren.

10. Arbeitsfahrzeug (10) nach einem der vorangehenden Ansprüche, wobei die Führung (34) ein offenes Ende (43) an einem Ende der Schiene (36) umfasst, sodass die Kamera (38) dazu eingerichtet ist, aus der Führung (34) geschoben zu werden.

11. Arbeitsfahrzeug (10) nach einem der vorangehenden Ansprüche, wobei das bildgebende System (28) einen Motor (78) umfasst, der antreibend mit der Kamera (38) verbunden ist, sodass der Motor (78) die Kamera (38) zwischen der Mehrzahl der Stellen (40) bewegt.

12. Arbeitsfahrzeug (10) nach Anspruch 11, wobei die Bedienumgebung (26) weiterhin eine Kamera-Steuereinrichtung (84) umfasst, die kommunizierend mit dem Motor (78) verbunden ist, sodass die Kamera-Steuereinrichtung (84) ein Signal zum Bewegen der Kamera (38) zwischen der Mehrzahl von Stellen (40) überträgt.

13. Arbeitsfahrzeug (10) nach einem der vorangehenden Ansprüche, wobei das Arbeitsfahrzeug (10) ein Traktor mit Heckbagger ist.

## Revendications

1. Véhicule de travail (10), le véhicule de travail (10) comprenant un corps (12), un outil articulé contrôlable (14) relié au corps (12), l'outil articulé (14) comprenant au moins deux bras (16) et un outil (18) positionné à une extrémité distale (20) de l'outil articulé (14), dans lequel l'outil articulé (14) peut être positionné par un opérateur du véhicule de travail (10) dans un environnement opérationnel (26), le véhicule de travail (10) comprenant en outre :
un système imageur (28) comprenant :
un écran (30) logé dans l'environnement opérationnel (26) du véhicule de travail (10) configuré pour afficher des images d'une zone de travail (32) ;
une voie (34) comprenant un rail (36) relié à au moins l'un des bras (16) de l'outil articulé (14) et s'étendant le long d'une longueur d'au moins un bras (16) ; et
une caméra (38) reliée à la voie (34), la caméra (38) étant reliée en communication avec l'écran (30), dans lequel la caméra (38) prend au moins une image de la zone de travail (32) et communique l'image à l'écran (30),
dans lequel la caméra (38) peut être positionnée à une pluralité d'emplacements (40) le long du rail (36) afin de prendre des images de la zone de travail (32) ;
le véhicule de travail étant **caractérisé en ce que** l'outil articulé (14) est une pelle rétrocaveuse, un premier bras (22) des au moins deux bras (16) est un bras de levage, et un deuxième bras (24) des au moins deux bras (16) est un bras plongeur, et dans lequel la voie (34) est reliée à au moins une partie inférieure (39) ou partie supérieure (37) d'au moins un bras de levage ou un bras plongeur.

2. Véhicule de travail (10) selon la revendication 1, dans lequel le système imageur (28) comprend en outre :
une structure de fixation (42) positionnée entre le rail (36) et la caméra (38) de sorte que la caméra (38) puisse glisser le long de la voie (34).

3. Véhicule de travail (10) selon la revendication 2, dans lequel la structure de fixation (42) comprend une interface mâle-femelle.

4. Véhicule de travail (10) selon la revendication 3, dans lequel une partie mâle de l'interface mâle-femelle comprend une protubérance (44) positionnée sur le rail (36) ou la caméra (38), et dans lequel la partie femelle de l'interface mâle-femelle comprend un canal (46) positionné sur l'autre rail (36) ou caméra (38).

5. Véhicule de travail (10) selon l'une quelconque des revendications précédentes, dans lequel le système imageur (28) comprend en outre :
un boîtier de caméra (48) entourant la caméra (38) et positionné entre la caméra (38) et la voie (34) de sorte que la caméra (38) soit reliée à la voie (34) via le boîtier de caméra (48).

6. Véhicule de travail (10) selon la revendication 5, dans lequel la caméra (38) peut être positionnée à l'intérieur du boîtier de caméra (48).

7. Véhicule de travail (10) selon l'une quelconque des revendications précédentes, dans lequel la caméra (38) peut tourner autour d'au moins un axe orthogonal à la voie (34).

8. Véhicule de travail (10) selon l'une quelconque des revendications précédentes, dans lequel le système imageur (28) comprend en outre un moyen pour fixer sélectivement la caméra (38) au rail (36).

9. Véhicule de travail (10) selon l'une quelconque des revendications précédentes, dans lequel la voie (34) comprend en outre des capuchons d'extrémité opposés (41) à des extrémités opposées du rail (36) de sorte que les capuchons d'extrémité opposés (41) définissent des emplacements d'extrémité (47) le long de la voie (34).

10. Véhicule de travail (10) selon l'une quelconque des revendications précédentes, dans lequel la voie (34) comprend une extrémité ouverte (43) à une extrémité du rail (36) de sorte que la caméra (38) soit configurée pour coulisser hors du rail (34).

11. Véhicule de travail (10) selon l'une quelconque des revendications précédentes, dans lequel le système imageur (28) comprend un moteur (78) couplé par entraînement à la caméra (38) de sorte que le moteur (78) place la caméra (38) entre la pluralité d'emplacements (40).

12. Véhicule de travail (10) selon la revendication 11, dans lequel l'environnement opérationnel (26) comprend en outre une commande caméra (84) reliée en communication au moteur (78) de sorte que la commande caméra (84) communique un signal afin de positionner la caméra (38) entre la pluralité d'emplacements (40).

13. Véhicule de travail (10) selon l'une quelconque des revendications précédentes, dans lequel le véhicule de travail (10) est une pelle rétrocaveuse pour tracteur-pelle.
